(19) Europäisches Patentamt
European Patent Office
Office européen des brevets

(11) **EP 2 516 815 B1**

(12) **EUROPÄISCHE PATENTSCHRIFT**

(45) Veröffentlichungstag und Bekanntmachung des Hinweises auf die Patenterteilung:
**15.06.2016   Patentblatt 2016/24**

(21) Anmeldenummer: **10805421.4**

(22) Anmeldetag: **21.12.2010**

(51) Int Cl.:
*F01N 9/00* (2006.01)     *F01N 3/023* (2006.01)
*F01N 11/00* (2006.01)     *F02D 41/02* (2006.01)

(86) Internationale Anmeldenummer:
**PCT/EP2010/007825**

(87) Internationale Veröffentlichungsnummer:
**WO 2011/079928 (07.07.2011 Gazette 2011/27)**

(54) **VERFAHREN ZUR REGENERATION EINES PARTIKELFILTERS**

METHOD FOR REGENERATING A PARTICLE FILTER

PROCÉDÉ DE RÉGÉNÉRATION D'UN FILTRE À PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009   DE 102009060509**

(43) Veröffentlichungstag der Anmeldung:
**31.10.2012   Patentblatt 2012/44**

(73) Patentinhaber: **MTU Friedrichshafen GmbH**
**88045 Friedrichshafen (DE)**

(72) Erfinder:
• **HEHLE, Marc**
**78464 Konstanz (DE)**
• **MÜLLER, Ralf**
**88693 Deggenhausertal (DE)**
• **REMELE, Jörg**
**88709 Hagnau (DE)**
• **SCHÄFER, Olaf**
**88045 Friedrichshafen (DE)**
• **SINZENICH, Holger**
**88677 Markdorf (DE)**
• **SPÄDER, Tim**
**88079 Kressbronn (DE)**

(74) Vertreter: **Kordel, Mattias**
**Gleiss Große Schrell und Partner mbB**
**Patentanwälte Rechtsanwälte**
**Leitzstrasse 45**
**70469 Stuttgart (DE)**

(56) Entgegenhaltungen:
**EP-A1- 1 602 807     US-A1- 2008 295 483**

**Beschreibung**

Die Erfindung betrifft ein Verfahren zur Regeneration eines Partikelfilters gemäß dem Oberbegriff des Anspruches 1.

Bezogen auf Partikelfilter betrifft die DE 198 38 032 A1 das Initiieren der Regeneration durch Erhöhen des Abgasgegendruckes im Bereich des Partikelfilters derart, dass während der Regenerationsphase der Durchflussquerschnitt des Partikelfilters temporär insbesondere getaktet vermindert wird. In Verbindung damit wird der Beladungszustand des Partikelfilters auf Basis aktuell erfasster motor- und filterspezifischer Parameter ermittelt und es wird unter Berücksichtigung dieser Parameter ein normierter Druckkennwert errechnet. Dieser wird mit einem Grenzwert verglichen und bei Überschreiten dieses Grenzwertes wird die Regeneration eingeleitet. Diese ist in ihrer Dauer auf einen vorbestimmten Grenzwert beschränkt und/oder wird dann beendet, wenn der jeweils aktuelle Kennwert für den Beladungszustand unter einen vorgegebenen Grenzwert abfällt.

In ähnlicher Weise wird auch bei der DE 42 30 180 A1 ein den Beladungszustand des Partikelfilters kennzeichnender Ist-Kennwert auf Basis von den Abgasvolumenstrom kennzeichnenden filterspezifischen thermodynamischen Größen in Zuordnung zu gemessenen motorspezifischen Größen ermittelt. Dieser Ist-Kennwert wird mit einem insbesondere im Versuch ermittelten Grenzwert verglichen, und es wird spätestens bei Überschreiten dieses Grenzwertes die Regeneration eingeleitet.

Eine weitere Möglichkeit zur Erfassung des Beladungszustandes eines Partikelfilters ist der DE 199 49 502 A1 zu entnehmen, bei der der Druckabfall über dem Partikelfilter über einen dimensionslosen Beladungsfaktor in Berücksichtigung normierter Werte für den Filtervordruck bei Leerlauf und unbeladenem Filter, dem Abgasmassenstrom bei Leerlauf und einer vorgegebenen Temperatur erfasst wird. Bei Überschreiten eines Differenzbetrages des jeweiligen aktuellen Beladungswertes zu einem dem unbeladenen Partikelfilter entsprechenden Beladungswert wird ein Regenerationsvorgang ausgelöst.

Bei diesen die Regeneration von Partikelfilter betreffenden Verfahren wird die Beladung des Partikelfilters in ihrer Gesamtheit berücksichtigt, eine Differenzierung zwischen bleibender Beladung durch Aschenrückstände und temporärer, durch Regeneration, wie etwa durch Abbrennen, wieder entfernbaren Rückständen wird nicht vorgenommen.

Über der Lebenszeit eines Filters mit zeitabhängig zunehmender Aschebeladung ist jedoch die Erfassung der Druckdifferenz über dem Partikelfilter hinsichtlich des Rußanteiles des beladenen Partikelfilters kaum noch aussagefähig.

Ausgehend hiervon sieht die EP 1 387 051 B1 vor, in Berücksichtigung der jeweiligen Aschebeladung die aktuelle Rußbeladung zu ermitteln und in Abhängigkeit von dieser die Regeneration durchzuführen, wobei die Aschebeladung primär in Berücksichtigung des Ölverbrauches der jeweils mit dem Partikelfilter verbunden Brennkraftmaschine ermittelt wird.

Im Falle der DE 10 2004 055 605 A1 wird aus einer Druckdifferenz über dem Partikelfilter ein Beladungswert für eine Rußbeladung des Partikelfilters bestimmt. Hierbei wird eine Änderung der Druckdifferenz über dem Partikelfilter aufgrund der abgelagerten Aschenmenge rechnerisch anhand eines Modells bestimmt. Hierzu wird davon ausgegangen, dass die im Partikelfilter akkumulierte Aschenmenge in einem Ablagerungszustand vorliegt, bei dem sich aufgrund der Konsistenz der abgelagerten Aschenmenge eine maximale Erhöhung der Druckdifferenz über dem Partikelfilter ergibt.

Für die Erfassung der Aschenbeladung, in deren Berücksichtigung ausgehend vom Druckabfall über dem Partikelfilter die aktuelle Rußbelegung bestimmt wird, in Abhängigkeit von der die Regeneration eingeleitet werden muss, gehen zum Beispiel die DE 101 54 261 A1 und die DE 102 23 427 A1 davon aus, dass die unmittelbar nach der Regeneration gemessene Druckdifferenz über dem Partikelfilter ein Maß für angesammelte Aschenmenge ist.

Dies wird gemäß der US 5 287 698 genutzt für die Bewertung der Druckdifferenz über dem Partikelfilter im Hinblick auf dessen aktuelle Rußbelegung und damit verbunden die Einleitung der Regeneration in Abhängigkeit von dieser.

Aus der US 2008/295483 A1 ist es für die Regeneration von Partikelfiltern in Abgasanlagen von Brennkraftmaschinen bekannt, die Regeneration in Abhängigkeit von dem Differenzdruck p über den Partikelfilter auszulösen, der sich über einem jeweiligen, auf einen Regenerationsabschnitt auslaufenden Arbeitsintervall aufbaut. Aufgrund des mit der Anzahl der Regenerationen anwachsenden Aschenanteiles ergibt sich eine zunehmend kleiner werdende Rußspeicherkapazität. Um diese möglichst vollständig zu nutzen, wird auf Basis des Ölverbrauchs der mit der Abgasanlage verbundenen Brennkraftmaschine über ein Steuergerät modellbasiert der zu erwartende Rußanfall ermittelt. Ausgehend hiervon wird bezogen auf die jeweils noch freie Rußspeicherkapazität des Partikelfilters der Auslösezeitpunkt für die nächste Regeneration festgelegt.

Grundsätzlich sind damit zwar Möglichkeiten der Differenzierung zwischen Ruß- und Aschebelegung und einer an der Rußbelegung orientierten Regenerierung des Partikelfilters gegeben, diese sind aber mit einem erheblichen Steuer- und/oder Regelaufwand verbunden.

Der Erfindung liegt die Aufgabe zugrunde, die zwischen aufeinander folgenden Regenerierungen liegenden Arbeitsintervalle in praxisbezogener einfacher Weise im Hinblick auf eine möglichst vollständige Nutzung der Rußaufnahmekapazität des Partikelfilters festzulegen.

Gemäß der Erfindung wird dies mit den Merkmalen des Anspruches 1 erreicht. Die Unteransprüche enthalten zweckmäßige Weiterbildungen des im Anspruch 1 umrissenen Verfahrens, die teilweise auch eigenständig schutzfähig sind.

Bei dem erfindungsgemäßen Verfahren wird, bezogen auf einen jeweiligen Filter - entsprechend auch für baugleiche Filter -, bezogen auf die Rußbeladung ein normierter Differenzdruck über dem Filter festgelegt, und zwar als Schwell- oder Grenzwert, bei dem ein Arbeitsintervall durch Regeneration zu beenden wäre.

Dieser Schwellwert dient über einem jeweiligen Arbeitsintervall der Festlegung eines Auslöselimits in Form einer Auslöse-Druckdifferenz $\Delta p_{Ausl}$ unter Berücksichtigung der jeweiligen Aschenbeladung, indem die am Ende des Regenerationsabschnittes des jeweils vorhergehenden Arbeitsintervalls durch den Aschenrückstand im Filter gegebene Aschendruckdifferenz $\Delta p_{Asch}$ zur normierten Beladungsdruckdifferenz $\Delta p_{norm}$ addiert wird. Die Auslöse-Druckdifferenz $\Delta p_{Ausl}$ am Ende eines jeweiligen Arbeitsintervalls berücksichtigt somit die innerhalb dieses Arbeitsintervalls eingetretenen Veränderungen in der Beladung mit Aschen, so dass sich für die Beladung mit Ruß, bezogen auf die Auslöse-Druckdifferenz $\Delta p_{Ausl}$ ein variabler Anteil ergibt, der mit zunehmender Aschenbeladung zwar kleiner wird, aber die volle Ausnutzung der Beladungskapazität des Partikelfilters mit Ruß in Verbindung mit einer entsprechenden Verkürzung des jeweiligen Arbeitsintervalls bei zunehmender Aschenbeladung ermöglicht.

Dies in Verbindung damit, dass, bezogen auf ein jeweiliges Arbeitsintervall, die Regeneration bei Überschreiten des Auslöselimits durch die der Veränderung der tatsächlichen Ruß- und Aschenbeladung innerhalb dieses Arbeitsintervalls entsprechende Druckdifferenz über dem Partikelfilter eingeleitet wird.

Da die als Auslöselimit dienende Auslöse-Druckdifferenz $\Delta p_{Ausl}$ durch die normierte Beladungsdifferenz $\Delta p_{norm}$ und die am Ende einer jeweiligen Regeneration gegebene Aschendruckdifferenz $\Delta p_{Asch}$ bestimmt ist und wie die den Veränderungen der Beladung mit Ruß und Aschen innerhalb eines Arbeitsintervalls entsprechende Druckdifferenz als Druckveränderung über dem Partikelfilter messtechnisch einfach erfasst werden kann, ist der für das erfindungsgemäße Verfahren zu betreibende Mess- und Rechenaufwand vergleichsweise gering und gut zu beherrschen. Zudem ermöglicht ein entsprechender Grundaufbau auch in einfacher Weise eine entsprechende Funktionsüberwachung des Partikelfilters hinsichtlich der maximal zulässigen Aschenbeladung, indem ein einer vorgegebenen Aschendruckdifferenz am Ende einer Regeneration entsprechendes Aschenlimit vorgegeben wird, bei dessen Überschreiten auch ein entsprechendes Wartungs- und oder Warnsignal ausgelöst wird.

In Kenntnis des über dem Partikelfilter auch in dessen unbeladenem Neuzustand sich ergebenden Druckabfalls kann der Filter weiterhin auf "Vorhandensein" oder "Defekt", etwa bei einem Filterdurchbruch, überwacht werden, beispielsweise im Hinblick auf davon abhängige Betriebsgenehmigungen. Entsprechendes gilt für die Überwachung hinsichtlich oberer Grenzwerte für den Druckabfall über dem Filter, die die Verstopfung des Filters signalisieren und dadurch bedingt gewisse Betriebsmodi der Brennkraftmaschine und/oder benutzerseitige Eingriffe, so beispielsweise eine benutzerseitige Einleitung der Regeneration, erfordern.

In Abhängigkeit von den sehr unterschiedlichen Einsatzbedingungen für Partikelfilter, beispielsweise bei deren Einsatz in Verbindung mit insbesondere Diesel-Brennkraftmaschinen in Kraftfahrzeugen, können sich auch längere Betriebsabschnitte, beispielsweise bei langen Autobahnfahrten, ergeben, in denen sich nur ein vergleichsweise geringer Rußanfall ergibt, so dass die rußabhängig über der Zeit anfallende Druckdifferenz über dem Partikelfilter in Verbindung mit dem vorgeschilderten erfindungsgemäßen Verfahren zu sehr langen und für die Funktion des Filters und/oder dessen Regenerierbarkeit nicht mehr zu vertretenden Arbeitsintervallen führen würde. Letzteres gilt auch für noch neue und/oder gereinigte Filter, solange diese keine oder nur eine geringe Aschenbeladung aufweisen. Im Hinblick auf solche Sachverhalte erweist es sich als zweckmäßig, wenn für die Dauer eines jeweiligen Arbeitsintervalles ein Zeitlimit vorgegeben wird, spätestens mit dessen Ablauf unabhängig davon, ob die Auslöse-Druckdifferenz $\Delta p_{Ausl}$ erreicht ist, die Regeneration eingeleitet wird.

Die Festlegung einer normierten Rußbeladungsdruckdifferenz $\Delta p_{norm}$ erfolgt zweckmäßigerweise im Rahmen der Erfindung unter Berücksichtigung und auf Basis von Betriebswerten, die insbesondere auch im Prüfstandsbetrieb einfach nachzufahren und zu erfassen sind, wobei eine erfindungsgemäß bevorzugte, normierte Beladungsdruckdifferenz $\Delta p_{norm}$ mittels der Formel

$$\Delta p_{norm} = \Delta p_{ist} \cdot \left( \frac{\dot{m}_{Abg,ref}}{\dot{m}_{Abg,ist}} \right) \cdot \left( \frac{T_{Abg,ref}}{T_{Abg,ist}} \right) \cdot \left( \frac{p_{0,ist}}{p_{0,ref}} \right)$$

ermittelt wird und die in der Formel benutzten Werte für den Abgasmassenstrom $\dot{m}$, die Abgastemperatur $T$ und den Abgasdruck $p_0$ stromauf des Partikelfilters bevorzugt jeweils gleichen, beliebig wählbaren Betriebspunkten der Brennkraftmaschine zugeordnet sind, womit sich die Beladungsdruckdifferenz $\Delta p_{norm}$ als ein in Berücksichtigung von Betriebsparametern, insbesondere den vorgenannten Betriebsparametern korrigierter Wert der der tatsächlichen Rußbelaldung entsprechenden Beladungsdruckdifferenz $\Delta p_{ist}$ darstellt.

Im Hinblick auf unterschiedliche Filtermaterialien, Filterbeschichtungen und/oder andere filterspezifische Werte, auch hinsichtlich der konstruktiven Auslegung des Partikelfilters, kann es zweckmäßig sein, solche Besonderheiten zur Ermittlung von $\Delta p_{norm}$ über einen insbesondere versuchstechnisch festzulegenden Korrekturfaktor zu berücksichtigen.

Weitere Einzelheiten und Merkmale der Erfindung ergeben sich aus den Ansprüchen, der Beschreibung und den Zeichnungen. Diese zeigen in

Fig. 1  in schematisierter Darstellung ein Beispiel für die Anordnung eines Partikelfilters in einem Abgasstrang einer Brennkraftmaschine, insbesondere einer Diesel-Brennkraftmaschine, und veranschaulichen in

Fig. 2  in einer schematisierten Übersicht die Renerationssteuerung des Partikelfilters nach dem erfindungsgemäßen Verfahren.

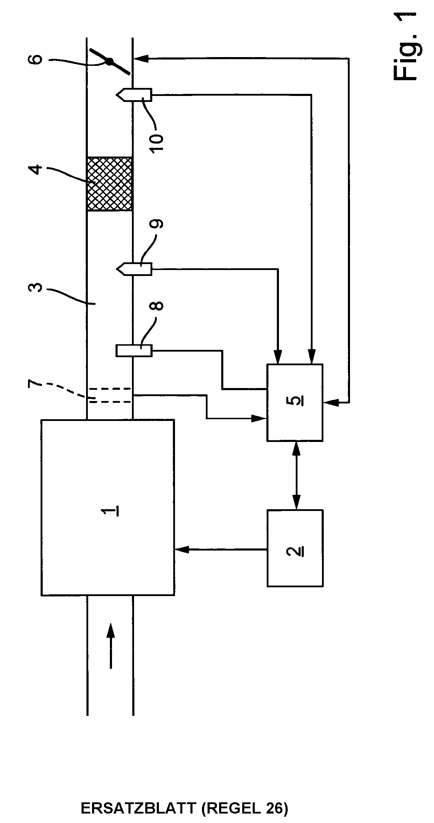

In der Schemadarstellung gemäß Fig. 1 ist mit 1 eine Brennkraftmaschine, insbesondere eine Diesel-Brennkraftmaschine, bezeichnet, der zur Versorgung mit Kraftstoff eine Einspritzpumpe 2 zugeordnet ist und in deren Abgasstrang 3 ein Partikelfilter 4 angeordnet ist, über den im Abgas enthaltene brennbare und nicht brennbare Rückstände insbesondere in Form von Ruß und Aschen aus dem Abgasstrom herausgefiltert werden. Im Hinblick auf die Regeneration des Partikelfilters 4 durch Abbrennen des Rußes und die Steuerung dieses Regenerationsprozesses ist eine Steuereinheit 5 vorgesehen, über die in Abhängigkeit vom Beladungsgrad sowie von der Art der Beladung des Partikelfilters 4 dessen Regeneration ausgelöst wird und gegebenenfalls auch auf den Verlauf der Regeneration Einfluss genommen werden kann.

Dies durch entsprechenden Eingriff in die Motorsteuerung, symbolisiert durch die Verbindung der Steuereinheit 5 mit der Einspritzpumpe 2 sowie eine Verbindung zu einer im Abgasstrang 3 nachgeordnet zum Partikelfilter 4 vorgesehenen Drosselklappe 6, über die der Abgasgegendruck und damit auch die Abgastemperatur beeinflusst werden kann. Im Rahmen der Erfindung liegt es auch, die Regeneration in anderer Weise, gegebenenfalls auch ergänzend zum Eingriff auf die Motorsteuerung einzuleiten, etwa durch Ansteuerung eines Brenners zur aktiven Regeneration über die Steuereinheit oder durch Einwirken der Steuereinheit 5 auf einen HC-Doser.

Bezogen auf für die Regeneration insbesondere wesentliche Einflussgrößen werden als Parameter der Abgasmassenstrom $\dot{m}$, die Temperatur T im Abgasstrang 3, der Abgasdruck $p_0$ stromauf des Partikelfilters 4 und die Abgasdruckdifferenz $\Delta p$ über dem Partikelfilter 4 erfasst. Hierzu sind symbolisch angedeutet ein Messgerät 7 für die Abgasmasse, ein Temperatursensor 8 sowie Drucksensoren 9 und 10, von denen der Drucksensor 9 stromauf und der Drucksensor 10 stromab des Partikelfilters 4 liegt. Der Abgasmassenstrom kann indirekt mit hinreichender Genauigkeit auch anderweitig erfasst werden, beispielsweise in Abhängigkeit vom angesaugten Luftvolumen, gegebenenfalls in Berücksichtigung der jeweiligen Einspritzmenge. Grundsätzlich ist auch eine indirekte Ermittlung des Abgasmassenstromes aus dem gemessenen Abgasvolumenstrom möglich.

In Berücksichtigung der genannten Parameter Abgasmassenstrom $\dot{m}$, Abgastemperatur T und Abgasdruck $p_0$ stromauf des Partikelfilters 4 lässt sich gemäß der Formel

$$\Delta p_{norm} = \Delta p_{ist} \cdot \left( \frac{\dot{m}_{Abg,ref}}{\dot{m}_{Abg,ist}} \right) \cdot \left( \frac{T_{Abg,ref}}{T_{Abg,ist}} \right) \cdot \left( \frac{p_{0,ist}}{p_{0,ref}} \right)$$

die normierte Rußbeladungsdruckdifferenz $\Delta p_{norm}$ festlegen. Diese bildet eine Richtgröße und ist mitbestimmend für das Auslöselimit für die ein jeweiliges Arbeitsintervall beendende Regeneration. Das Auslöselimit ist dabei durch die Druckdifferenz $\Delta p_{Ausl}$ vorgegeben, die sich aus der Summe der durch die Aschenbeladung am Ende des Regenerationsabschnittes des vorhergehenden Arbeitsintervalles gegebenen Aschendruckdifferenz $\Delta p_{Asch}$ und der für die Normierung erfassten Betriebsparameter berücksichtigenden Beladungsdruckdifferenz $\Delta p_{norm}$ für Ruß ergibt.

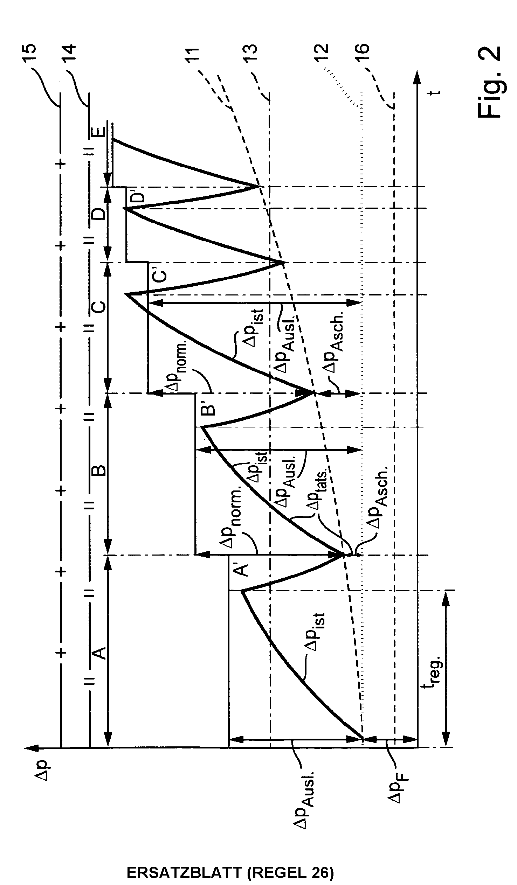

Einen entsprechenden Verfahrensablauf für die Regenerationssteuerung des Partikelfilters 4 veranschaulicht Fig. 2, in der entsprechende Druckdifferenzen $\Delta p$ über der Zeit aufgetragen sind.

Der Partikelfilter 4 als solcher hat schon im Neuzustand einen gewissen Strömungswiderstand im Abgasstrang 9 zur Folge und es ergibt sich damit eine Druckdifferenz $\Delta p_F$ als Ausgangswert (Linie 12). Durch Kontrolle dieses Wertes lässt sich unter anderem auch feststellen, ob der Partikelfilter 4 defekt, beispielsweise durchgebrannt ist, da sich dann eine geringere Druckdifferenz einstellt. Wird also diese Druckdifferenz unterschritten, so ist dies nicht nur ein Indiz für einen defekten Filter, sondern auch ein Hinweis darauf, dass der Partikelfilter 4 möglicherweise ausgebaut und das Fahrzeug damit ohne Betriebserlaubnis ist. Ein entsprechend niedriger Differenzdruck - entsprechend der Linie 16 - kann somit als entsprechender Hinweis genutzt und zum Beispiel in ein Sperrsignal für die Brennkraftmaschine umgesetzt werden.

Im Betrieb ergibt sich eine Beladung des Filters 4 mit Ruß und Aschen und innerhalb eines jeden Arbeitsintervalles - solche Arbeitsintervalle sind als A bis E in Fig. 2 veranschaulicht - stellt sich, entsprechend der zunehmenden Beladung mit Ruß und Aschen, eine größer werdende tatsächliche Druckdifferenz $\Delta p_{tats}$ als Summe der aus der Aschenbeladung resultierenden Aschenbeladungsdruckdifferenz $\Delta p_{Asch}$ und der der gegebenen Rußbeladung entsprechenden Rußbeladungsdruckdifferenz $\Delta p_{ist}$ ein. Gegen das Ende eines jeweiligen Arbeitsintervalls, in Fig. 2 der Arbeitsintervalle A bis D, erfolgt eine Regeneration durch Abbrennen des Rußes. Die entsprechenden Regenerationsabschnitte als Teile der Arbeitsintervalle sind mit A' bis D' bezeichnet. Am Ende eines jeweiligen Regenerationsabschnittes A' bis D' liegt eine gegenüber der Druckdifferenz $\Delta p_F$ um den Betrag $\Delta p_{Asch}$ vergrößerte Druckdifferenz vor, entsprechend dem nach der Regeneration im Partikelfilter 4 verbliebenen Aschenrückstand. Die über der Zeit mit der Anzahl der Regenerationen wachsende Aschenbeladung des Partikelfilters ist in Fig. 2 durch die Aschenbeladungskurve 11 veranschaulicht.

Eingeleitet wird für die jeweiligen Arbeitsintervalle A bis D die Regeneration im Ausführungsbeispiel gemäß Fig. 2 für die Arbeitsintervalle A und B zeitabhängig, und für die Arbeitsintervalle C und D differenzdruckabhängig. Die zeitabhängige, bezogen auf die Arbeitsintervalle A und B veranschaulichte Auslösung der Regeneration erfolgt, wenn innerhalb eines festgesetzten Zeitlimits $t_{reg}$ eines Arbeitsintervalles A bis D die Regeneration nicht druckabhängig eingeleitet ist.

Die druckabhängige Einleitung der Regeneration ist davon abhängig, ob innerhalb des Zeitlimits $t_{reg}$ eines jeweiligen Arbeitsintervalls die tatsächliche, auf der der Druckdifferenz $\Delta p_F$ über dem Partikelfilter 4 entsprechenden Linie 12 aufsetzende Druckdifferenz $\Delta p_{tats}$ größer wird als ein Schwellwert, der, ebenfalls in Berücksichtigung der der Aschenbeladung, durch die Summe der aus der Aschenbeladung resultierenden Aschenbeladungsdruckdifferenz $\Delta p_{Asch}$ und der normierten Rußbeladungsdruckdifferenz $\Delta p_{norm}$ vorgegeben ist. Sowohl die normierte Rußbeladungsdruckdifferenz $\Delta p_{norm}$ wie auch die gegebene Rußbeladungsdruckdifferenz $\Delta p_{ist}$ setzen also auf der Aschenbeladungskurve 11 auf. Da die normierte Beladungsdruckdifferenz $\Delta p_{norm}$ für ein jeweiliges Arbeitsintervall aufsetzend auf der Aschenbeladungskurve 11 beginnt, ist für die Arbeitsintervalle - in Fig. 2 die Intervalle B bis E - ein Auslöselimit als Schwellwert gegeben, das sich in der Summe aus der für alle Intervalle in gleicher Weise normierten Druckdifferenz $\Delta p_{norm}$ und der der jeweiligen Aschenbeladung des Partikelfilters 4 zu Beginn des Arbeitsintervalls entsprechenden Aschendruckdifferenz $\Delta p_{Asch}$ ergibt.

Während bezogen auf die Arbeitsintervalle A und B bei gleichbleibendem Zeitlimit $t_{reg}$ die Regeneration zeitabhängig eingeleitet wird, ist bezogen auf das Arbeitsintervall C die differenzdruckabhängige Einleitung der Regeneration veranschaulicht, und zwar zeitlich gesehen im Bereich und nach Überschreiten der für das Arbeitsintervall C maßgeblichen, durch die Summe der Aschendruckdifferenz $\Delta p_{Asch}$ zu Beginn dieses Arbeitsintervalls und der normierten Druckdifferenz $\Delta p_{norm}$ gegebenen Druckdifferenz als Schwellwert und Auslöselimit, entsprechend der Auslösedruckdifferenz $\Delta p_{Ausl}$.

Grundsätzlich können auf das Arbeitsintervall C gemäß Fig. 2 mehrere, insbesondere in der Praxis auch viele Arbeitsintervalle folgen, in denen, wie für das Arbeitsintervall D veranschaulicht, eine differenzdruckabhängig eingeleitete Regeneration und/oder eine durch das vorgegebene Zeitlimit eingeleitete Regeneration gemäß Arbeitsintervallen A und B erfolgt. Über der Summe der Arbeitsintervalle ergibt sich aber grundsätzlich, wie auch aus Fig. 2 ersichtlich, eine wachsende Aschenbeladung und es wird dementsprechend auch ein Zeitpunkt erreicht, ab dem die Arbeitsintervalle zumindest für einen wirtschaftlichen Betrieb nicht mehr lang genug sind und dementsprechend eine Reinigung oder ein Austausch des Partikelfilters 4 stattfinden muss.

Eine entsprechende, kritische Aschenbeladung des Filters 4, und eine dieser Beladung entsprechende Aschendruckdifferenz $\Delta p_{Asch}$ ist in Fig. 2 durch die Aschenlimitlinie 13 veranschaulicht. Diese zeigt bezogen auf das Ausführungsbeispiel gemäß Fig. 2, dass während des Arbeitsintervalls D die Aschenbeladung auf einen Wert angewachsen ist, der über dem Aschenlimit gemäß Linie 13 liegt, so dass, wie für das Arbeitsintervall E angedeutet, nur noch ein auf Reinigung und/oder Austausch des Filters auslaufender Betrieb mit Nutzung der durch die letzte Regeneration frei gewordenen Speicherkapazitäten sinnvoll möglich ist.

Sollte dennoch eine nochmalige Regeneration nötig oder gewünscht sein, so kann diese auf manuelle Anforderung bei einem durch die Linie 14 symbolisierten oberhalb der üblichen Betriebsbereiche liegenden Differenzdruckniveau eingeleitet werden, so dass ein Notprogramm zur Verfügung steht.

Ergeben sich Sonderumstände, wie etwa Filterverstopfungen, die Differenzdrücke $\Delta p$ über dem Partikelfilter 4 zur Folge haben, welche zur Zerstörung des Filters und/oder zu Schäden an der Brennkraftmaschine führen können, so wird bei Erreichen solcher Differenzdrücke, wie sie durch die Linie 15 angedeutet sind, ein Notalarm ausgelöst und/oder derart in die Steuerung der Brennkraftmaschine eingegriffen, dass diese allenfalls noch in einem Notbetrieb laufen kann.

Bezugszeichenliste

1    Brennkraftmaschine

2      Einspritzpumpe
3      Abgasstrang
4      Partikelfilter
5      Steuereinheit
6      Drosselklappe
7      Messgerät (für Abgasmasse)
8      Temperatursensor
9      Drucksensor
10     Drucksensor
11     Aschenbeladungskurve
12     Linie (Druckdifferenz über rückstandsfreien Partikelfilter)
13     Linie (Aschenlimit)
14     Linie (manuelle Regenerations-Anforderung)
15     Linie (Notalarm)
16     Linie (Nachweis Partikelfilter vorhanden)

$\Delta p_{ist}$ )
$\Delta p_{norm}$ )
$\Delta p_{Asch}$ )
$\Delta p_{F}$ )        Druckdifferenzen
$\Delta p_{tats}$ )
$\Delta p_{Ausl}$ )

$t_{reg}$     Zeitlimit Anforderung Regeneration

A )               A' )
B )               B' )
C )      Arbeitsintervalle     C' )     Regenerationsabschnitte
D )               D' )
E )               E' )

**Patentansprüche**

1.   Verfahren zur Regeneration eines Partikelfilters (4), bei dem zumindest über einem Teil der Lebensdauer des Partikelfilters (4) innerhalb aufeinander folgender Arbeitsintervalle (A bis E) jeweils Beladung und Regeneration erfolgen und die Regeneration in Berücksichtigung einer durch die Beladung mit Ruß und Aschen bestimmten Druckdifferenz $\Delta p$ über dem Partikelfilter (4) eingeleitet wird,
**dadurch gekennzeichnet,**
**dass** für die Regeneration eines Arbeitsintervalles (A - E) als Auslöselimit eine Auslöse-Druckdifferenz $\Delta p_{Ausl}$ vorgegeben ist, die sich für ein jeweiliges Arbeitsintervall (A - E) dynamisch aus der Summe der durch die Aschenbeladung am Ende eines Regenerationsabschnittes (A' - D')des vorhergehenden Arbeitsintervalles (A - D) gegebenen Aschendruckdifferenz $\Delta p_{Asch}$ und einer normierten Rußbeladungsdruckdifferenz $\Delta p_{norm}$ des zu regenerierenden Arbeitsintervalles ergibt, wobei, bezogen auf ein jeweiliges Arbeitsintervall (A - D), das Überschreiten des Auslöselimits $\Delta p_{Ausl}$ durch die der tatsächlichen Ruß- und Aschenbeladung entsprechende Druckdifferenz $\Delta p_{tats}$ über dem Partikelfilter (4) als Signal für das Einleiten der Regeneration genutzt wird und wobei die normierte Rußbeladungsdruckdifferenz $\Delta p_{norm}$ sich als in Berücksichtigung von Betriebsparametern korrigierter Wert der der tatsächlichen Rußbeladung entsprechenden Rußbeladungsdruckdifferenz $\Delta p_{ist}$ darstellt und als, auf Basis von Betriebswerten korrigierende Betriebsparameter der Abgasmassenstrom $\dot{m}$, die Temperatur T im Abgasstrang und der Abgasdruck $p_0$ stromaufwärts des Partikelfilters (4) berücksichtigt sind.

2.   Verfahren nach Anspruch 1, **dadurch gekennzeichnet,**
**dass** die normierte Rußbeladungs-Druckdifferenz $\Delta p_{norm}$ mittels der Formel

$$\Delta\mathrm{p}_{\mathrm{norm}} \;=\; \Delta\mathrm{p}_{\mathrm{ist}} \;\cdot\; \left(\frac{\dot{m}_{Abg,ref}}{\dot{m}_{Abg,ist}}\right) \;\cdot\; \left(\frac{T_{Abg,ref}}{T_{Abg,ist}}\right) \;\cdot\; \left(\frac{p_{0,ist}}{p_{0,ref}}\right)$$

ermittelt wird.

3. Verfahren nach Anspruch 1 oder 2,
**dadurch gekennzeichnet,**
**dass** die maximal zulässige Aschenbeladung durch ein vorgegebenes, einer vorgegebenen Aschendruckdifferenz $\Delta p_{Asch}$ entsprechendes Aschenlimit (Aschenbeladungskurve 11) bestimmt ist und dass mit Überschreiten des Aschenlimits ein Signal, insbesondere ein Warn-, Abschalt- und/oder Reinigungssignal ausgelöst wird.

4. Verfahren nach Anspruch 3,
**dadurch gekennzeichnet,**
**dass** bei am Ende eines Regenerationsabschnittes (A' - D') eines Arbeitsintervalles (A - D) das Aschenlimit (Aschenbeladungskurve 11) überschreitender Aschendruckdifferenz $\Delta p_{Asch}$ die zulässige Aschenbeladung überschritten ist.

5. Verfahren nach einem der Ansprüche 1 bis 4,
**dadurch gekennzeichnet,**
**dass** der Partikelfilter (14) im Arbeitsbetrieb auf einen Filterdurchbruch dadurch überwacht wird, dass im Bereich einer, insbesondere bei einer der Druckdifferenz $\Delta p_F$ über dem Partikelfilter (4) im Neuzustand entsprechenden Druckdifferenz als Defektlimit (Linie 12) ein Signal, insbesondere ein Warnsignal, ausgelöst wird.

6. Verfahren zur Regeneration eines Partikelfilters (4), bei dem zumindest über einem Teil der Lebensdauer des Partikelfilters (4) innerhalb aufeinander folgender Arbeitsintervalle (A bis E) jeweils Beladung und Regeneration erfolgen und die Regeneration in Berücksichtigung einer durch die Beladung mit Ruß und Aschen bestimmten Differenzdrucks $\Delta p$ über dem Partikelfilter (4) eingeleitet wird, nach einem der vorhergehenden Ansprüche,
**dadurch gekennzeichnet,**
**dass** als Nachweissignal für das Vorhandensein eines Partikelfilters (4) die Druckdifferenz über dem Partikelfilter (4) auf Unterschreiten einer Druckdifferenz (Linie 16) überwacht wird, die unterhalb der Druckdifferenz $\Delta p_F$ über dem Partikelfilter (4) in dessen Neuzustand liegt.

7. Verfahren nach einem der vorhergehenden Ansprüche,
**dadurch gekennzeichnet,**
**dass** bei einer Druckdifferenz $\Delta p$ über dem Partikelfilter (4), die oberhalb der dem Auslöselimit entsprechenden Druckdifferenz $\Delta p_{Ausl}$ liegt, eine Regeneration des Partikelfilters (4) fremdgesteuert, insbesondere handgesteuert, eingeleitet werden kann.

8. Verfahren nach einem der vorhergehenden Ansprüche,
**dadurch gekennzeichnet,**
**dass** ein Abregellimit (Linie 15) für den Partikelfilter (4) vorgesehen ist, das durch einen obersten Grenzwert für die Druckdifferenz $\Delta p$ über dem Partikelfilter (4) bestimmt ist.

9. Verfahren nach einem der vorhergehenden Ansprüche,
**dadurch gekennzeichnet,**
**dass** ein innerhalb eines Arbeitsintervalles (A, B) liegendes Zeitlimit $t_{reg}$ vorgesehen ist, bei dem unabhängig davon, ob die Auslöse-Druckdifferenz $\Delta p_{Ausl}$ erreicht ist, die Regeneration ausgelöst wird.

**Claims**

1. Method for regenerating a particle filter (4), in which loading and regeneration occur respectively over at least part of the service life of the particle filter (4) within successive working intervals (A to E), and the regeneration is initiated taking into account a pressure difference $\Delta p$ across the particle filter (4), which is determined by means of the loading with soot and ash,
**characterized**
**in that** a triggering pressure difference $\Delta p_{Ausl}$ is predefined as a triggering limit for the regeneration of a working interval (A - E) and is obtained dynamically for a respective working interval (A - E) from the sum of the ash pressure difference $\Delta p_{Asch}$ given by the ash loading at the end of a regeneration step (A' - D') of the preceding working interval (A - D) and a standardized soot loading pressure difference $\Delta p_{norm}$ of the working interval to be regenerated, wherein the exceeding of the triggering limit $\Delta p_{Ausl}$ by the pressure difference $\Delta p_{tats}$ corresponding to the actual soot and ash loading is used in relation to a respective working interval (A - D) by means of the particle filter (4) as a signal for the initiation of the regeneration, and wherein the standardized soot loading pressure difference $\Delta p_{norm}$ is obtained as a value, corrected taking into account operating parameters, of the soot loading pressure difference $\Delta p_{ist}$ corresponding to the actual soot loading, and the exhaust gas mass flow $\dot{m}$, the temperature T in the exhaust gas train and the exhaust gas pressure $p_0$ upstream of the particle filter (4) are taken into account as operating parameters correcting on the basis of operating values.

2. Method according to Claim 1, **characterized in that** the standardized soot loading pressure difference $\Delta p_{norm}$ is determined by means of the formula

$$\Delta p_{norm} = \Delta p_{ist} \cdot \left(\frac{\dot{m}_{Abg,ref}}{\dot{m}_{Abg,ist}}\right) \cdot \left(\frac{T_{Abg,ref}}{T_{Abg,ist}}\right) \cdot \left(\frac{p_{0,ist}}{p_{0,ref}}\right)$$

3. Method according to Claim 1 or 2,
   **characterized**
   **in that** the maximum permissible ash loading is determined by a predefined ash limit (ash loading curve 11) corresponding to a predefined ash pressure difference $\Delta p_{Asch}$, and in that when the ash limit is exceeded a signal, in particular a warning signal, switch-off signal and/or cleaning signal, is triggered.

4. Method according to Claim 3,
   **characterized**
   **in that** the permissible ash loading is exceeded when, at the end of a regeneration step (A' - D') of a working interval (A - O), there is an ash pressure difference $\Delta p_{Asch}$ which exceeds the ash limit (ash loading curve 11).

5. Method according to one of Claims 1 to 4,
   **characterized**
   **in that** in the working mode the particle filter (14) is monitored for a filter breakdown in that a signal, in particular a warning signal, is triggered in the region of, in particular in the case of, a pressure difference, as a defect limit (line 12), which corresponds to the pressure difference $\Delta p_F$ across the particle filter (4) in the new state.

6. Method for regenerating a particle filter (4), in which loading and regeneration occur respectively over at least part of the service life of the particle filter (4) within successive working intervals (A to E), and the regeneration is initiated taking into account a differential pressure $\Delta p$ across the particle filter (4), which is determined by means of the loading with soot and ash, according to one of the preceding claims,
   **characterized**
   **in that**, as an evidence signal for the presence of a particle filter (4), the pressure difference across the particle filter (4) is monitored for the undershooting of a pressure difference (line 16) which is below the pressure difference $\Delta p_F$ across the particle filter (4) in the new state thereof.

7. Method according to one of the preceding claims,
   **characterized**
   **in that** when there is a pressure difference $\Delta p$ across the particle filter (4) above the pressure difference $\Delta p_{Ausl}$ corresponding to the triggering limit, a regeneration of the particle filter (4) can be initiated under external control, in particular under manual control.

8. Method according to one of the preceding claims,
   **characterized**
   **in that** a deactivation limit (line 15) for the particle filter (4) is provided which is determined by an uppermost limiting value for the pressure difference $\Delta p$ across the particle filter (4).

9. Method according to one of the preceding claims, **characterized**
in that a time limit $t_{reg}$, occurring within a working interval (A, B) is provided at which the regeneration is triggered irrespective of whether the triggering pressure difference $\Delta p_{Ausl}$ is reached.

**Revendications**

1. Procédé de régénération d'un filtre (4) à particules dans lequel un chargement et une régénération ont lieu pendant au moins une partie de la durée de vie du filtre (4) à particules à l'intérieur d'intervalles de travail (A à E) successifs, la régénération étant lancée en tenant compte d'une différence de pression $\Delta p$ sur le filtre (4) à particules déterminée par la charge en suie et en cendres,
**caractérisé en ce que**
pour la régénération d'un intervalle de travail (A-E), pour chaque intervalle de travail (A-E), une différence de pression de déclenchement $\Delta p_{Ausl}$ qui résulte dynamiquement de la somme de la différence de pression de cendres $\Delta p_{Asch}$ donnée à la fin d'une section de régénération (A'-D') de l'intervalle de travail (AD) précédent et de la différence de pression normée $\Delta p_{norm}$ de la charge en suie de l'intervalle de travail à régénérer est définie comme limite de déclenchement,
**en ce que** pour chaque intervalle de travail (A-D), le dépassement de la limite de déclenchement $\Delta p_{Ausl}$ par la différence de pression $\Delta p_{tats}$ sur le filtre (4) à particules, qui correspond à la charge effective en suie et en cendres, est utilisé comme signal de lancement de la régénération,
**en ce que** la différence de pression normée $\Delta p_{norm}$ de la charge en suite est représentée par la valeur, corrigée en tenant compte de paramètres de fonctionnement, de la différence de pression $\Delta p_{ist}$ de la charge en suie qui correspond à la charge effective en suie et
**en ce que** le débit massique $\dot{m}$ des gaz de fumée, la température T dans le parcours des gaz de fumée et la pression $p_0$ des gaz de fumée en amont du filtre (4) particules sont pris en compte comme paramètres de fonctionnement assurant une correction sur la base des valeurs de fonctionnement.

2. Procédé selon la revendication 1, **caractérisé en ce que** la différence de pression normée $\Delta p_{norm}$ de la charge en suie est déterminée au moyen de la formule

$$\Delta p_{norm} = \Delta p_{ist} \cdot \left(\frac{\dot{m}_{Abg,ref}}{\dot{m}_{Abg,ist}}\right) \cdot \left(\frac{T_{Abg,ref}}{T_{Abg,ist}}\right) \cdot \left(\frac{p_{0,ist}}{p_{0,ref}}\right)$$

3. Procédé selon les revendications 1 ou 2, **caractérisé en ce que** la charge maximale admissible en cendres est définie par une limite de cendres (courbe 11 de charge en cendres) prédéterminée et correspondant à une différence de pression $\Delta p_{Asch}$ prédéterminée des cendres et **en ce que** lorsque la limite en cendres est dépassée, un signal et en particulier un signal d'avertissement, de débranchement et/ou de nettoyage est délivré.

4. Procédé selon la revendication 3, **caractérisé en ce que** lorsque la différence de pression de cendres $\Delta p_{Asch}$ dépasse la limite des cendres (courbe 11 de charge en cendres) à la fin d'une section de régénération (A'-D') d'un intervalle de travail (A-D), la charge admissible en cendres est dépassée.

5. Procédé selon l'une des revendications 1 à 4, **caractérisé en ce qu'**en fonctionnement de travail, une rupture du filtre (14) à particules est surveillée par le fait que dans la plage d'une différence de pression et en particulier à une différence de pression qui correspond à la différence de pression $\Delta p_F$ sur le filtre (4) à particules à l'état neuf, utilisée comme limite de défaut (ligne 12), un signal, en particulier un signal d'avertissement, est délivré.

6. Procédé de régénération d'un filtre (4) à particules dans lequel un chargement et une régénération ont lieu pendant au moins une partie de la durée de vie du filtre (4) à particules à l'intérieur d'intervalles de travail (A à E) successifs, la régénération étant lancée en tenant compte d'une pression différentielle $\Delta p$ sur le filtre (4) à particules déterminée par la charge en suie et en cendres, selon l'une des revendications précédentes, **caractérisé en ce que** comme signal de détection de la présence d'un filtre (4) à particules, lors de la non atteinte d'une différence de pression (ligne 16) la différence de pression sur le filtre (4) à particules, inférieure à la différence de pression $\Delta p_F$ sur le filtre (4) à particules à l'état neuf, est surveillée.

**7.** Procédé selon l'une des revendications précédentes, **caractérisé en ce que** lorsque la différence de pression $\Delta p$ sur le filtre (4) à particules est située au-dessus de la différence de pression $\Delta p_{Ausl}$ correspondant à la limite de déclenchement, une régénération du filtre (4) à particules peut être lancée par commande extérieure et en particulier commande manuelle.

**8.** Procédé selon l'une des revendications précédentes, **caractérisé en ce qu'**une limite de dérèglement (ligne 15) du filtre (4) à particule est prévue et est déterminée par la valeur limite supérieure de la différence de pression $\Delta p$ sur le filtre (4) à particules.

**9.** Procédé selon l'une des revendications précédentes, **caractérisé en ce qu'**une limite de temps $t_{reg}$ située à l'intérieur d'un intervalle de travail (A, B) est prévue pour laquelle, que la différence de pression de déclenchement $\Delta p_{Ausl}$ soit atteinte ou non, la régénération est déclenchée.

Fig. 1

Fig. 2

ERSATZBLATT (REGEL 26)

EP 2 516 815 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19838032 A1
- DE 4230180 A1
- DE 19949502 A1
- EP 1387051 B1
- DE 102004055605 A1
- DE 10154261 A1
- DE 10223427 A1
- US 5287698 A
- US 2008295483 A1